# EUROPÄISCHE PATENTANMELDUNG

(11) **EP 0 743 426 A1**
(43) Veröffentlichungstag der Anmeldung: **20.11.1996**
(21) Anmeldenummer: 96810275.6
(22) Anmeldetag: 29.04.1996
(51) Int. Cl.: F01K 23/10

(54) **Kombinierte Gas-/Dampf-Kraftwerksanlage**

(30) Priorität: 18.05.1995 CH 1461/95
(71) Anmelder: ABB Management AG, CH-5401 Baden (CH)
(72) Erfinder: Bachmann, Rolf, 5312 Döttingen (CH); Nielsen, Henrik, 5430 Wettingen (CH)

(57) **Zusammenfassung**

Bei einer kombinierten Gas-/Dampf-Kraftwerksanlage wird ND-Dampf im Bypass-Betrieb der Dampfturbinenanlage (3) direkt über eine ND-Bypass-Leitung (24) in den Speisewasserbehälter (4) zur Erwärmung des aus dem Kondensator (21) in den Dampfkreislauf zurückgeführten Kondensats verwendet, Diese Schaltung bedeutet sowohl eine Vereinfachung des Kondensators (22), als auch eine Reduzierung seiner Baugrösse und damit seiner Produktionskosten. Demzufolge kann ebenfalls die Grösse des Kraftwerksgebäudes reduziert werden.

## Beschreibung

### TECHNISCHES GEBIET

Die Erfindung betrifft eine kombinierte Gas-/Dampf-Kraftwerksanlage, wie sie im Oberbegriff des ersten Anspruchs beschrieben ist.

### STAND DER TECHNIK

Derartige kombinierte Gas-/Dampf-Kraftwerksanlagen sind bekannt aus "Combined-Cycle Gas & Steam Power Plants, R. Kehlhofer, The Fairmont Press, USA, 1991, Seite 74.
Diese Kraftwerksanlage weist eine Gasturbogruppe mit nachgeschaltetem Abhitzedampferzeuger auf, der Dampf in einem Hochdruck-(HD)- und in einem Niederdruck-(ND)-Dampfkreislauf für eine Dampfturbinenanlage bereitstellt. Abströmseitig der Dampfturbine wird entspannter Dampf in einem Kondensator abgekühlt und mittels einer Kondensatpumpe einem Speisewasserbehälter mit Entgaser zugeführt. Je eine Speisewasserpumpe bedient den HD- und den ND-Dampfkreislauf aus dem Speisewasserbehälter.

Die Kriterien für die Auslegung aller Komponenten dieser kombinierten Gas-/Dampf-Kraftwerksanlage unterliegen den verschiedenen Betriebsbedingungen beim Anfahren, Teil- bzw. Vollastbetrieb und beim gezielten, oder auslösungsbedingten Abfahren der Anlage.

Für den Sonderfall einer Tripauslösung der Dampfturbinenanlage bei Lastbetrieb muss der vom Abhitzedampferzeuger bereitgestellte HD- und ND-Dampf entweder direkt an die Umgebung abgegeben, oder im Kondensator abgekühlt werden. Die Abgabe von Frischdampf aus Dampfkreisläufen an die Umgebung ist allerdings mit Verlusten grosser Frischwassermengen und starker Lärmbelästigung verbunden. Hinzu kommt, dass die Lärmemissionen Richtlinien mit Grenzwertbeschränkung unterliegen, wodurch die Abgabe von Frischdampf an die Umgebung nur bedingt anwendbar ist.

Die Kondensation des anfallenden HD- und ND-Dampfes, der bei einer Tripauslösung der Dampfturbinenanlage in Bypass-Leitung an der Dampfturbine vorbei und direkt in den Kondensator geleitet wird, ist vor allem wegen der Abdampfenergie kostenintensiv. Das erhöhte Abdampfvolumen erfordert grosse Rohrquerschnitte mit entsprechenden Ventilen, und gibt gleichzeitig eine entscheidende Vorgabe für die Auslegung des Kondensators. Dieses grosse ND-Dampfvolumen bedingt eine für den Normalbetrieb nicht notwendige Überdimensionierung des Kondensators sowie Rohrleitungen, und führt somit zu hohen Produktionskosten (Material-, Personalaufwand) und Baukosten (Gebäudefläche, Gebäudehöhe).

### DARSTELLUNG DER ERFINDUNG

Der Erfindung liegt die Aufgabe zugrunde, eine kombinierte Gas-/Dampf-Kraftwerksanlage der eingangs genannten Art dahingehend zu optimieren, dass die Auslegung der Dampfkreislaufkomponenten für den besonderen Betriebszustand des Bypass-Betriebes der Dampfturbinenanlage, kostengünstiger für die Anlage und das Kraftwerksgebäude erfolgen kann, und gleichzeitig die Energie des ND-Dampfes nutzbringend verwendet wird.

Erfindungsgemäss wird diese Aufgabe durch die Merkmale des unabhängigen Anspruchs gelöst.

Die Vorteile der Erfindung sind unter anderem darin zu sehen, dass einerseits die Grösse und damit die Kosten sowohl für den Kondensator, als auch für das Kraftwerksgebäude reduziert werden, und zum anderen der Energiegehalt des ND-Dampfes durch die Aufwärmung des Kondensats abgeführt wird.

Vorteilhafte und zweckmässige Weiterbildungen der erfindungsgemässen Aufgabenlösung sind in den weiteren Ansprüchen gekennzeichnet.

### KURZE BESCHREIBUNG DER ZEICHNUNG

Im folgenden werden anhand der Zeichnung Ausführungsbeispiele dargestellt und näher erläutert. Alle für das Verständnis der Erfindung unwesentlichen Merkmale sind fortgelassen. Die Strömungsrichtungen der Medien gehen unmittelbar aus der Schaltung hervor und sind deshalb nicht mit Pfeilen eingezeichnet.

Es zeigen:
- Fig. 1: eine kombinierte Gas-/Dampf-Kraftwerksanlage mit einer Kondensataufwärmung mittels ND-Dampf bei Bypass-Betrieb der Dampfturbine;
- Fig. 2: eine Ausführungsvariante der kombinierten Gas-/Dampf-Kraftwerksanlage

Es sind nur die für das Verständnis der Erfindung wesentlichen Elemente gezeigt.

### WEG ZUR AUSFÜHRUNG DER ERFINDUNG

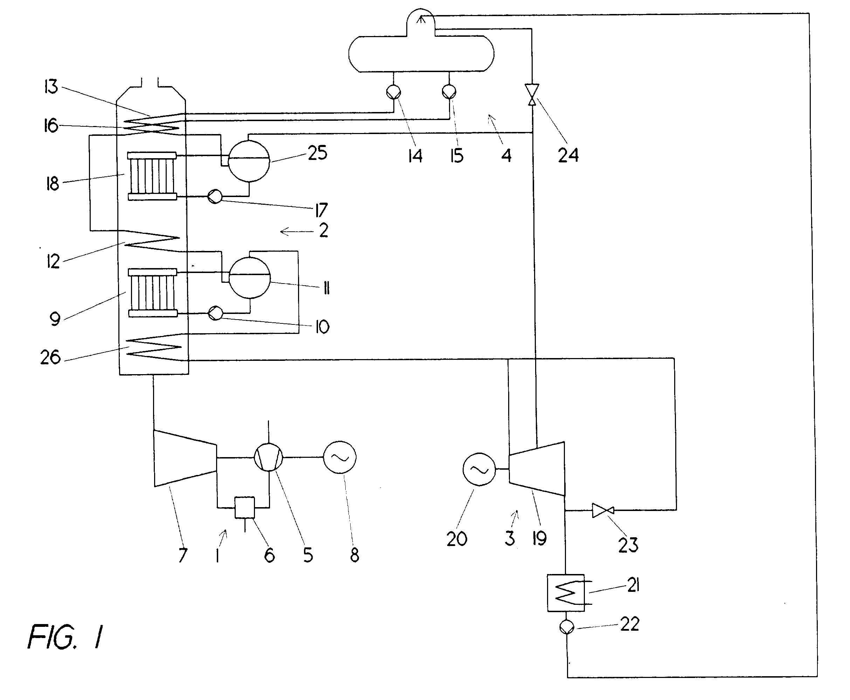

In Fig. 1 ist eine kombinierte Gas-/Dampf-Kraftwerksanlage dargestellt. Diese besteht im wesentlichen aus einer Gasturbogruppe 1 mit Abhitzekessel 2 und einer dazu in Wirkverbindung stehenden Dampfturbinenanlage 3 und einem Speisewasserbehälter 4.
Die Gasturbogruppe 1 besteht aus einem Verdichter 5, der eine Brennkammer 6 mit komprimierter Luft für die Verbrennung eines Brennstoffs versorgt, wobei das Verbrennungsgemisch, in einer Turbine 7 entspannt wird, die dabei einen Generator 8 antreibt. Die heissen Abgase aus der Turbine 7 werden zur Dampferzeugung in einen Abhitzedampfkessel 2 geleitet. In diesem Abhitzedampfkessel wird Hochdruck-(HD)-Dampf in einem HD-Verdampfer 9 erzeugt, der von einer HD-Umwälzpumpe 10 aus einer HD-Trommel 11 gespeist wird. Anschliessend wird der HD-Dampf in einem Überhitzer 26 weiter erwärmt und der Dampfturbinenanlage 3 zugeführt. Die HD-Trommel 11 wird aus dem Speisewasserbehälter 4 von einer HD-Speisewasserpumpe 14 über einen HD-Ekonomiser 12, 13 mit Speisewasser versorgt.

Eine Niederdruck-(ND)-Trommel 25 wird von einer ND-Speisewasserpumpe 15 über einen ND-Ekonomiser 16 mit Speisewasser versorgt, dass durch die ND-Umwälzpumpe 17 in den ND-Verdampfer 18 geleitet wird, dort verdampft und der Dampfturbinenanlage 3 zugeführt wird. In der Dampfturbinenanlage entspannt der HD- und ND-Dampf in einer Dampfturbine 19, die einen Generator 20 antreibt.

In einem Kondensator 21 abströmseitig der Dampfturbine 19 wird entspannter Dampf gekühlt und anschliessend mittels einer Kondensatpumpe 22 zum Speisewasserbehälter 4 zurückgeführt.
Im Bypass-Betrieb der Dampfturbinenanlage 3 wird der Kondensator 21 nur noch mit HD-Dampf beaufschlagt, der durch eine Bypass-Leitung 23 an der Dampfturbine 19 vorbeigeführt wird.
Der anfallende ND-Dampf aus dem ND-Verdampfer 18 wird bei Bypass-Betrieb der Dampfturbinenanlage 3 über einen ND-Bypass 24 direkt dem Speisewasserbehälter 4 zugeführt, wo die ND-Dampfenergie zur Aufwärmung des dem Speisewasserbehälter 4 zugeführten Kondensats genutzt wird.
Durch diese Einleitung des ND-Dampfes in den Speisewasseerbehälter vereinfacht sich der Kondensator 21, und die im ND-Dampf enthaltene Energie wird genutzt für die Aufwärmung des Kondensats.
Unmittelbar mit der Grösse des Kondensators 21 ist die Kraftwerksgebäudegrösse verbunden, die gleichermasse reduziert wird.

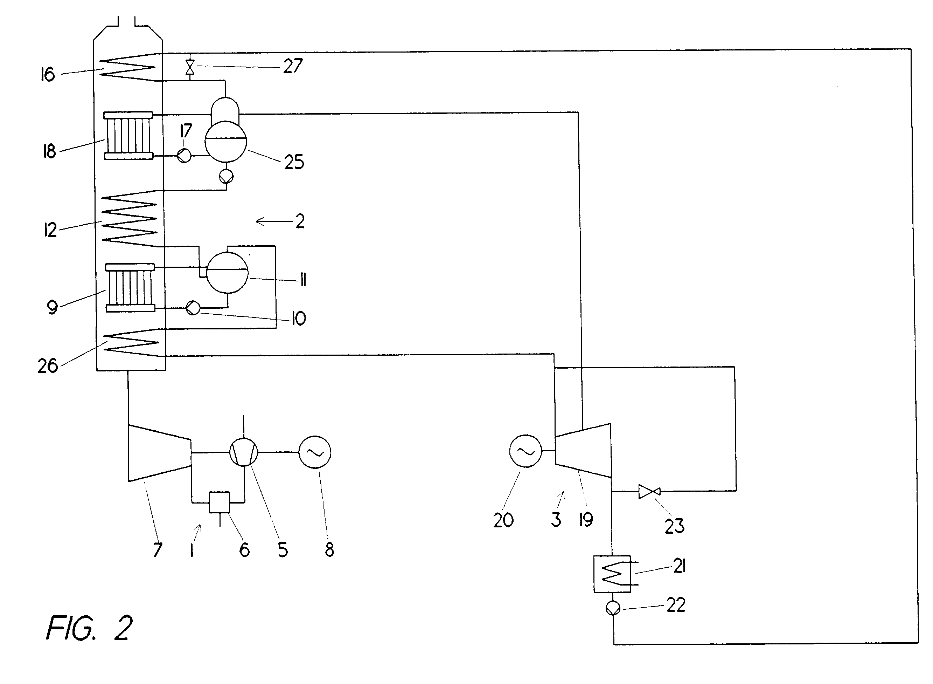

Die in Fig. 2 gezeigte Auführungsvariante findet Anwendung bei kombinierten Gas-/Dampf-Kraftwerksanlagen, die ohne Speisewasserbehälter betreibbar sind. Bei solchen Anlagen vereinigt die ND-Trommel 25 zusätzlich Funktionen eines Speisewasserbehälters auf sich. Hier wird im Fall des Bypass-Betriebes der Dampfturbinenanlage 3 Kondensat aus dem Kondensator 21 über einen Kondensat-Bypass 27 am ND-Ekonomiser 16 vorbei, und direkt in die ND-Trommel 25 geleitet. Dort wird das Kondensat mit ND-Dampf aus den ND-Verdampfer 18 erwärmt. Auch bei dieser Ausführungsvariante reduziert sich die Grösse und die Kosten für den Kondensator 21 und das Kraftwerksgebäude.

Selbstverständlich ist die Erfindung nicht auf die gezeigten und beschriebene Ausführungsbeispiele beschränkt. Die Erfindung ist auch dann anwendbar, wenn der Dampferzeuger beispielsweise zusätzlich einen Mitteldruck-(MD)-Verdampfer oder Zwischenüberhitzer aufweist.

### BEZUGSZEICHENLISTE

- 1: Gasturbogruppe
- 2: Dampferzeuger
- 3: Dampfturbinenanlage
- 4: Speisewasserbehälter
- 5: Verdichter
- 6: Brennkammer
- 7: Turbine
- 8: Generator
- 9: HD-Verdampfer
- 10: HD-Umwälzpumpe
- 11: HD-Trommel
- 12: HD-Ekonomiser
- 13: HD-Ekonomiser
- 14: HD-Speisewasserpumpe
- 15: ND-Speisewasserpumpe
- 16: ND-Ekonomiser
- 17: ND-Umwälzpumpe
- 18: ND-Verdampfer
- 19: Dampfturbine
- 20: Generator
- 21: Kondensator
- 22: Kondensatpumpe
- 23: HD-Bypass
- 24: ND-Bypass
- 25: ND-Trommel
- 26: Überhitzer
- 27: Kondensat-Bypass

## Patentansprüche

1. Verfahren zum Betreiben einer kombinierten Gas-/Dampf-Kraftwerksanlage, im wesentlichen bestehend aus einer Gasturbogruppe (1) und einem der Gasturbogruppe (1) nachgeschalteten Dampfkreislauf mit einer Dampfturbinenanlage (3) und einem Kondensator (21), aus dem Kondensat in den Dampfkreislauf zurückgeführt wird, und dieses Kondensat im fortlaufenden Dampfkreislauf in mindestens einem ND- und mindestens einem HD-Verdampfer (18, 9) eines Abhitzedampfkessels (2) verdampft wird,
gekennzeichnet dadurch,
dass bei Bypass-Betrieb der Dampfturbinenanlage (3) das in den Dampfkreislauf zurückgeführte Kondensat aus dem Kondensator mit ND-Dampf(21) erwärmt wird.

2. Verfahren nach Anspruch 1,
dadurch gekennzeichnet,
dass das Kondensat durch den ND-Dampf in einem Speisewasserbehälter (4), der mit dem Abhitzedampferzeuger (2) und der Dampfturbinenanlage (3) in einer Wirkverbindung steht, erwärmt wird.

3. Verfahren nach Anspruch 1,
dadurch gekennzeichnet,
dass das Kondensat durch den ND-Dampf in einer Niederdrucktrommel (25), die mit dem Abhitzedampferzeuger (2) und der Dampfturbinenanlage (3) in einer Wirkverbindung steht, erwärmt wird.
